# EUROPEAN PATENT APPLICATION

(11) **EP 4 667 164 A1**
(43) Date of publication of application: **24.12.2025**
(21) Application number: 24183826.7
(22) Date of filing: 21.06.2024
(51) Int. Cl.: B25F 5/02, H01M 50/247

(54) **A LOCKOUT DEVICE FOR PREVENTING A BATTERY PACK FROM ATTACHING TO A BATTERY INTERFACE OF A POWER TOOL**

(71) Applicant: Black & Decker, Inc., New Britain, CT 06053 (US)
(72) Inventor: KADLECEK, Daniel, 65474 Bischofsheim (DE); SCHMITT, Simon Titus, 65551 Limburg (DE); DEMANT, Tobias, 65201 Wiesbaden (DE)
(74) Representative: SBD IPAdmin

(57) **Abstract**

A lockout device for preventing a battery pack from attaching to a battery interface of a power tool, the battery interface being for mechanically and electrically engaging a battery pack to the power tool, the battery interface comprising a retention device for mechanically securing the battery pack to the battery interface, the lockout device comprising: a coupling configured for engagement with the retention device of the battery interface to prevent a battery pack from being attached to the battery interface.

## Description

### TECHNICAL FIELD

The present disclosure relates to a lockout device for preventing a battery pack from attaching to a battery interface of a power tool.

### BACKGROUND

An electrical power tool can be powered by a battery pack which is attachable to a battery interface of the power tool. Attaching the battery pack to the power tool enables the power tool to be used.

In some situations, it is desirable to prevent use of a power tool. For example where the power tool is an experimental power tool or a damaged power tool. Using such a power tool can present a risk to the user and the surroundings. Use of the power tool can be prevented by locking the power tool in a box or providing a lockable box surrounding the battery interface so that attachment of the battery pack can be prevented.

This is cumbersome.

It is desirable to provide a more convenient way to prevent a battery pack from attaching to a battery interface of a power tool.

### SUMMARY

According to an aspect of the present invention, there is provided a lockout device for preventing a battery pack from attaching to a battery interface of a power tool, the battery interface being for mechanically and electrically engaging a battery pack to the power tool, the battery interface comprising a retention device for mechanically securing the battery pack to the battery interface, the lockout device comprising: a coupling configured for engagement with the retention device of the battery interface to prevent a battery pack from being attached to the battery interface.

Engagement of the lockout device with the battery interface can block the battery from being attached to the battery interface. This arrangement allows control over whether a battery pack can be operatively engaged with the power tool, and so allows control over use of the power tool.

The lockout device is suitably configured to have: an unlocked configuration in which the lockout device can be attached to and removed from the battery interface; and a locked configuration in which the lockout device cannot be removed from the battery interface.

The lockout device suitably comprises a latch and a device body, the latch being movable relative to the device body, and the lockout device is suitably configured so that, in the locked configuration, the latch is in a latch engagement position in which the latch is engageable with the battery interface to prevent removal of the lockout device from the battery interface.

Suitably, the lockout device is configured so that, in the unlocked configuration, the latch is in a latch disengagement position in which the latch is disengaged from the battery interface and the lockout device is removable from the battery interface.

Suitably, the latch is movable between the latch engagement position and the latch disengagement position by being one or more of: slidable, pivotable, rotatable.

The lockout device is suitably configured to be movable along a first axis of the lockout device for engagement with the battery interface, and the latch is suitably configured to restrict movement of the lockout device along the first axis.

The lockout device suitably comprises a battery interface engagement feature for engaging with the battery interface. The battery interface engagement feature is suitably mechanically engageable with the battery interface. The battery interface engagement feature is suitably aligned along the first axis and/or is configured to restrict movement of the lockout device in engagement with the battery interface to movement substantially along the first axis. Suitably, the battery interface engagement feature comprises a protrusion or recess for engaging with a recess or protrusion of the battery interface.

The lockout device suitably comprises a rail for sliding engagement along a groove of the battery interface. Suitably, the lockout device comprises two rails, each on opposing sides of the lockout device, for sliding engagement along respective grooves of the battery interface.

The battery interface engagement feature enables the lockout device to be engaged with the battery interface as the lockout device is moved in one direction relative to the battery interface and suitably restricts movement between the lockout device and the battery interface in another, different, direction. Suitably, the one or more rails are aligned with the first axis of the lockout device. Suitably, the one or more rails of the lockout device allow the lockout device to move into engagement with the battery interface as the lockout device is moved relative to the battery interface along the first axis of the lockout device. Engagement of the one or more rails with the respective one or more grooves of the battery interface restricts relative movement between the lockout device and the battery interface in a direction other than along the first axis.

Suitably, the latch comprises a lip configured to engage with a locking groove of the battery interface in the latch engagement position.

Suitably, the latch comprises an inclined surface adjacent the lip. The inclined surface can help the lip move over a portion of the battery interface and so become seated in the locking groove of the battery interface as the lockout device moves along the first axis. Suitably the lip is elongated in a direction misaligned with the first axis. Suitably the lip is elongated in a direction substantially perpendicular to the first axis.

Suitably, the lockout device comprises a latch retainer configured to retain the latch in the latch engagement position. Suitably the latch retainer comprises a feature on the latch and a feature on the device body, the features cooperating with one another to enable the latch to be retained in the latch engagement position. Suitably, the latch comprises a first latch retainer feature and the device body comprises a second latch retainer feature. The first and second latch retainer features are suitably configured to align with one another, or to engage with one another.

The latch retainer may comprise a first hole or cut-out portion in the latch and a second hole or cut-out portion in the device body.

Suitably, the lockout device is configured so that, in the locked configuration, the first hole or cut-out portion aligns with the second hole or cut-out portion. Suitably, moving the lockout device towards the unlocked configuration causes the first hole or cut-out portion to become misaligned with the second hole or cut-out portion. That is, in the latch engagement position, the first hole or cut-out portion may align with the second hole or cut-out portion. In the latch disengagement position, the first hole or cut-out portion may not align with (i.e. be misaligned with) the second hole or cut-out portion. This arrangement allows a padlock or tie (or indeed any other suitable retaining member) to be located through the first and second holes or cut-out portions so as to restrict movement of the latch from the latch engagement position to the latch disengagement position. Locating such a retaining member through the first and second holes or cut-out portions suitably restricts a change from the locked configuration of the lockout device to the unlocked configuration of the lockout device.

The latch may be biased towards the latch engagement position. Biasing the latch towards the latch engagement position can help prevent the lockout device from coming away from the battery interface unintentionally. This can thus help improve the security of the lockout device. Suitably, biasing the latch towards the latch engagement position is achieved by a resilience of a portion of the material of the lockout device. Suitably, a joining portion, joining the latch to the device body, is resilient. The lockout device may comprise a biasing element arranged to bias the latch towards the latch engagement position. The biasing element may comprise a resilient member. The biasing element may comprise a spring. Biasing the latch towards the latch engagement position can help more securely to seat the lip of the latch in the locking groove of the battery interface.

The latch may comprise an actuating lip. Suitably, the actuating lip extends outwardly of the lockout device. The provision of the actuating lip enables a user to manually move the latch towards the latch disengagement position.

Suitably, the lockout device comprises a cover configured to cover an electrical terminal of the battery interface. This arrangement can provide protection over the electrical terminal of the power tool. The cover is suitably configured as a weather-proof cover.

According to another aspect of the present invention, there is provided a lockout device for preventing a battery pack from attaching to a battery interface of a power tool, the lockout device comprising:
a coupling configured for engagement with the battery pack to prevent the battery pack from being attached to the battery interface.

Suitably, the battery interface of the power tool is for mechanically and electrically engaging the battery pack to the power tool and comprises a retention device for mechanically securing the battery pack to the battery interface. Suitably, the battery pack comprises a power tool interface for mechanically and electrically engaging the battery pack to the power tool, the power tool interface comprising a battery pack coupling configured for engagement with the retention device to secure the battery pack to the battery interface. Suitably, the coupling of the lockout device is configured for engagement with the battery pack coupling to prevent the battery pack from being attached to the battery interface.

Engagement of the lockout device with the battery pack can block the battery from being attached to the battery interface. This arrangement allows control over whether a battery pack can be operatively engaged with the power tool, and so allows control over use of the power tool.

The lockout device may be configured to have: an unlocked configuration in which the lockout device can be attached to and removed from the battery pack; and a locked configuration in which the lockout device cannot be removed from the battery pack.

The lockout device may comprise a latch and a device body, the latch being movable relative to the device body, and the lockout device is configured so that, in the locked configuration, the latch is in a latch engagement position in which the latch is engageable with the battery pack to prevent removal of the lockout device from the battery pack.

Suitably, the lockout device is configured so that, in the unlocked configuration, the latch is in a latch disengagement position in which the latch is disengaged from the battery pack and the lockout device is removable from the battery pack.

Suitably, the latch is movable between the latch engagement position and the latch disengagement position by being one or more of: slidable, pivotable, rotatable.

The lockout device may be configured to be movable along a first axis of the lockout device for engagement with the battery pack, and the latch may be configured to restrict movement of the lockout device along the first axis.

The lockout device may comprise a battery pack engagement feature for engaging with the battery pack. The battery pack engagement feature is suitably mechanically engageable with the battery pack. The battery pack engagement feature is suitably aligned along the first axis and/or is configured to restrict movement of the lockout device in engagement with the battery pack to movement substantially along the first axis. Suitably, the battery pack engagement feature comprises a protrusion or recess for engaging with a recess or protrusion of the battery pack.

The lockout device may comprise a groove for sliding engagement along a rail of the battery pack. Suitably, the lockout device comprises two grooves, each on opposing sides of the lockout device, for sliding engagement along respective rails of the battery pack.

The battery pack engagement feature enables the lockout device to be engaged with the battery pack as the lockout device is moved in one direction relative to the battery pack and suitably restricts movement between the lockout device and the battery pack in another, different, direction. Suitably, the one or more grooves are aligned with the first axis of the lockout device. Suitably, the one or more grooves of the lockout device allow the lockout device to move into engagement with the battery pack as the lockout device is moved relative to the battery pack along the first axis of the lockout device. Engagement of the one or more grooves with the respective one or more rails of the battery pack restricts relative movement between the lockout device and the battery pack in a direction other than along the first axis.

The latch may comprise a lip configured to engage with a locking groove of the battery pack in the latch engagement position. Suitably, the latch comprises an inclined surface adjacent the lip. The inclined surface can help the lip move over a portion of the battery pack and so become seated in the locking groove of the battery pack as the lockout device moves along the first axis. Suitably the lip is elongated in a direction misaligned with the first axis. Suitably the lip is elongated in a direction substantially perpendicular to the first axis.

The lockout device may comprise a latch retainer configured to retain the latch in the latch engagement position. Suitably the latch retainer comprises a feature on the latch and a feature on the device body, the features cooperating with one another to enable the latch to be retained in the latch engagement position. Suitably, the latch comprises a first latch retainer feature and the device body comprises a second latch retainer feature. The first and second latch retainer features are suitably configured to align with one another, or to engage with one another.

The latch retainer may comprise a first hole or cut-out portion in the latch and a second hole or cut-out portion in the device body. Suitably, the lockout device is configured so that, in the locked configuration, the first hole or cut-out portion aligns with the second hole or cut-out portion. Suitably, moving the lockout device towards the unlocked configuration causes the first hole or cut-out portion to become misaligned with the second hole or cut-out portion. That is, in the latch engagement position, the first hole or cut-out portion may align with the second hole or cut-out portion. In the latch disengagement position, the first hole or cut-out portion may not align with (i.e. be misaligned with) the second hole or cut-out portion. This arrangement allows a padlock or tie (or indeed any other suitable retaining member) to be located through the first and second holes or cut-out portions so as to restrict movement of the latch from the latch engagement position to the latch disengagement position. Locating such a retaining member through the first and second holes or cut-out portions suitably restricts a change from the locked configuration of the lockout device to the unlocked configuration of the lockout device.

The latch may be biased towards one of the latch engagement position and the latch disengagement position. Biasing the latch towards the latch engagement position can help prevent the lockout device from coming away from the battery pack unintentionally. This can thus help improve the security of the lockout device. Suitably, biasing the latch towards the latch engagement position is achieved by a resilience of a portion of the material of the lockout device. Suitably, a joining portion, joining the latch to the device body, is resilient. The lockout device may comprise a biasing element arranged to bias the latch towards the latch engagement position. The biasing element may comprise a resilient member. The biasing element may comprise a spring. Biasing the latch towards the latch engagement position can help more securely to seat the lip of the latch in the locking groove of the battery pack.

The latch may comprise an actuating lip. Suitably, the actuating lip extends outwardly of the lockout device. The provision of the actuating lip enables a user to manually move the latch towards the latch disengagement position.

The lockout device may comprise a cover configured to cover an electrical terminal of the battery pack. This arrangement can provide protection over the electrical terminal of the battery pack. The cover is suitably configured as a weather-proof cover.

According to another aspect of the present invention, there is provided a power tool having a battery interface, the power tool comprising a lockout device as described herein attached to the battery interface.

According to another aspect of the present invention, there is provided a power tool having a battery interface comprising a retention device for mechanically securing a battery pack to the battery interface, the power tool comprising a lockout device as described herein attached to the battery interface.

According to another aspect of the present invention, there is provided a battery pack, the battery pack comprising a lockout device as described herein attached to the battery pack.

According to another aspect of the present invention, there is provided a power tool system comprising: a power tool comprising a battery interface for mechanically and electrically engaging a battery pack to the power tool, the battery interface having a retention device for mechanically securing the battery pack to the battery interface; a battery pack comprising a power tool interface for mechanically and electrically engaging the battery pack to the power tool, the power tool interface having a battery pack coupling configured for engagement with the retention device to secure the battery pack to the battery interface; and a lockout device as described herein.

Any one or more of the above features may be combined as appropriate, in any combination, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 shows a perspective view of a battery interface;
Figure 2 shows a perspective view of a power tool having a battery interface;
Figure 3 shows a top perspective view of a lockout device;
Figure 4 shows a bottom perspective view of the lockout device of figure 3;
Figure 5 shows a side cutaway view of the lockout device of figure 3;
Figure 6 shows a side cutaway view of the lockout device of figure 3 in a different configuration;
Figure 7 shows a top perspective view of the lockout device of figure 3 to which a padlock is attached;
Figure 8 shows a side cutaway view of the arrangement of figure 7;
Figure 9 shows the battery interface of figure 1 to which another lockout device is fitted;
Figure 10 shows the arrangement of figure 9 in which the lockout device is partially transparent;
Figure 11 shows a longitudinal cutaway view of the arrangement of figure 9;
Figure 12 shows a lateral cutaway view of the arrangement of figure 9;
Figure 13a shows a front view of a lockout device with a cut-out;
Figure 13b shows a perspective view of the body portion of the lockout device of figure 13a;
Figure 13c shows a perspective view of the latch portion of the lockout device of figure 13a; and
Figure 13d shows a side cutaway view of the lockout device of figure 13a.

The accompanying drawings illustrate various examples. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

The present disclosure describes a lockout device for preventing a battery pack from attaching to a battery interface of a power tool. Preventing a battery pack from attaching to a battery interface of a power tool can prevent operation of the power tool.

When developing power tools, features of a power tool can be modified so as to investigate those features and/or the behaviour of the power tool with and without those features. For example, one or more features of a power tool can be disabled. Such features can include safety features of the power tool. Thus, using such a power tool can present a risk to the user. Where a user has deliberately deactivated one or more features, that user will know how to appropriately handle the power tool in a safe manner. However, another user may not appreciate that the one or more features have been deactivated.

Using such a tool without knowing how its behaviour has been modified can therefore become dangerous to the user.

In another example, a power tool may be damaged. The damage may not be visible on the exterior of the power tool. Using the damaged power tool can present a safety risk.

It is therefore desirable to restrict use of such power tools. The power tool can be locked so that it cannot be used. Locking the power tool from being used can be achieved, as explained herein, by locking the battery interface of a battery-powered power tool. This can involve blocking or preventing a battery pack from being electrically connected to the battery interface of the power tool.

The present disclosure relates to a lockout device that fits onto a battery interface of a power tool to prevent unintended use. When the device is fitted, the tool cannot be used because the user will not be able to attach a battery pack to the tool. To prevent unintended use of a battery pack, for example if the battery pack is damaged or experimental, a lockout device can fit onto the battery pack to prevent it from being electrically attached to a power tool.

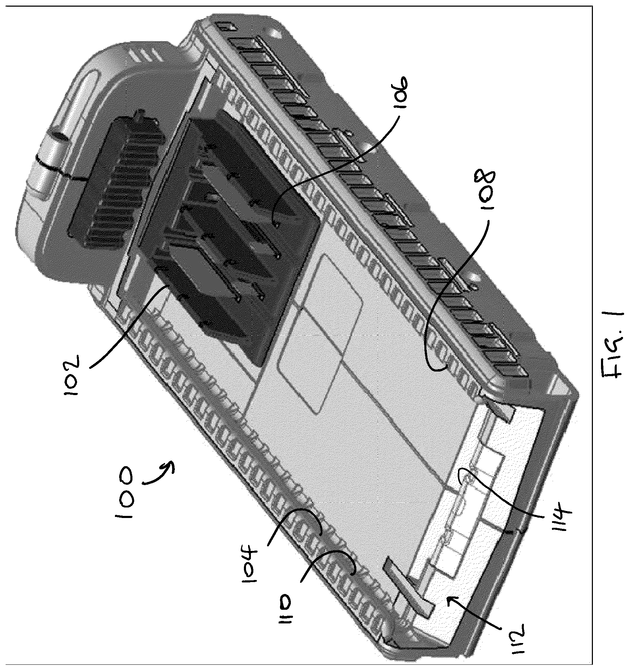

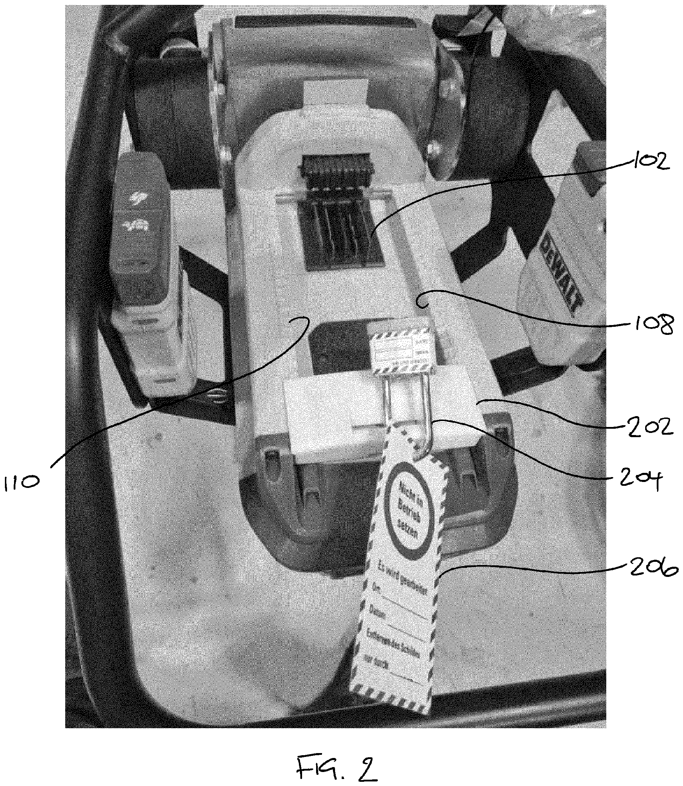

Figure 1 shows a perspective view of a battery interface of a power tool. Figure 2 shows a perspective view of a power tool having a battery interface as illustrated in figure 1. A lockout device is attached to the battery interface of figure 2.

Typically, power tools and battery packs form part of a power tool ecosystem. A common interface between battery packs and tools can be provided on different types of tools (e.g. a drill, a saw, a compactor and so on) and different types of battery packs (e.g. of different capacities). In this way, a single battery pack can be used to provide power to multiple tools, and multiple types of tools, within the power tool ecosystem.

Referring to figure 1, the battery interface 100 of the power tool comprises an electrical coupling 102 and a mechanical coupling 104. The electrical coupling 102 comprises an electrical terminal. As illustrated, the electrical terminal comprises multiple electrical contacts 106. The mechanical coupling may form at least part of a retention device of the battery interface for mechanically securing a battery pack to the battery interface. The mechanical coupling comprises two grooves 108 110, one located on each side of the battery interface 100. Each groove 108 110 extends along the length of the battery interface from an open end 112 of the battery interface.

A battery pack (not illustrated) comprises two rails on either side of the battery pack. Each rail is sized and configured (and the battery pack itself is sized and configured) so that as the battery pack is attached to the battery interface, the rails of the battery pack slide into and along the grooves of the battery interface. A battery terminal of the battery pack slides into electrical engagement with the electrical terminal 102 of the battery interface as the battery pack is fully engaged with the battery interface, thereby enabling the tool to be powered by the battery pack.

The battery pack rails are held within the battery interface grooves, which prevents the battery pack from moving relative to the battery interface in a direction other than a direction aligned with the grooves.

Referring now to figure 2, a lockout device 202 can be attached to the battery interface 100. The lockout device engages with the battery interface via the open end 112 of the battery interface 100. The lockout device slides at least partially along the grooves 108 110 of the battery interface. As will be explained in more detail, a lock such as a padlock 204 can be provided which can prevent unauthorized removal of the lockout device 202 from the battery interface 100. A label or tag 206 is also illustrated in figure 2. This tag can indicate the reason why the tool is not to be used, and/or it can indicate a person or group of people who can authorise use of the tool. The tag may also be used for tool tracking. The tag may function as a security device during transport. The tag can be attached to the lockout device by a cable tie rather than a padlock. Attaching the lockout device can prevent unintended use, since the padlock or cable tie needs to be deliberately removed before the lockout device can be removed from the battery interface.

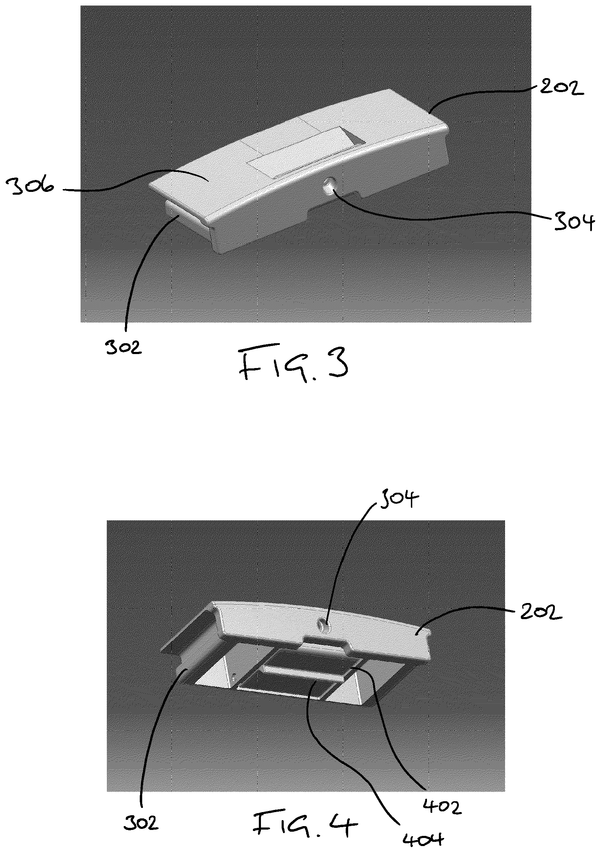

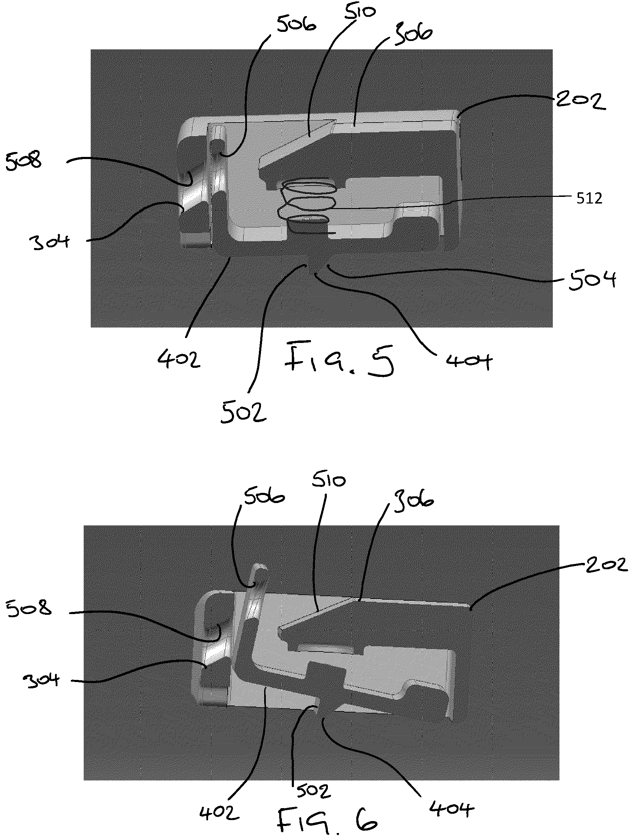

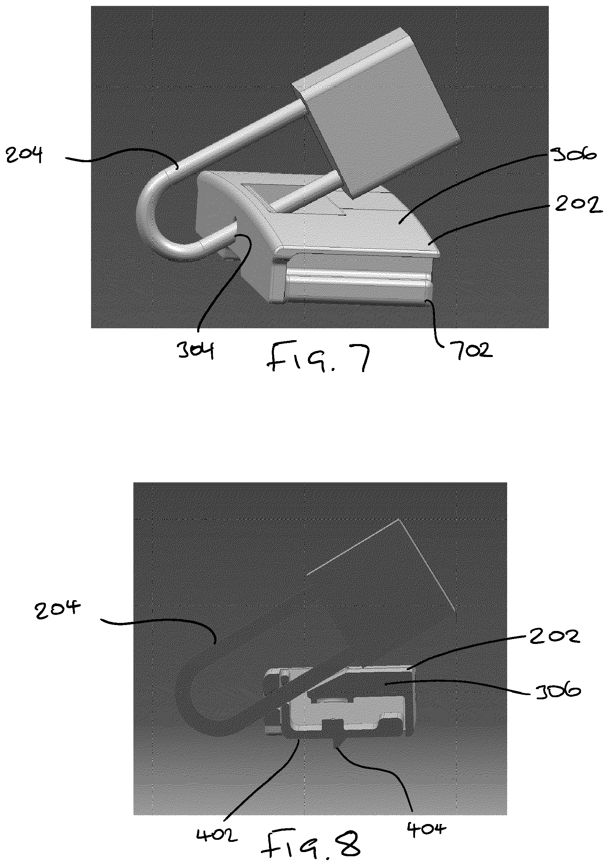

The lockout device shown in figure 2 is illustrated in figures 3 to 8. Figure 3 shows a top perspective view of the lockout device 202. Figure 4 shows a bottom perspective view of the lockout device 202. Figures 5 and 6 show cutaway side views of the lockout device 202 in different configurations. Figures 7 and 8 show perspective and cutaway side views of the lockout device 202 to which a padlock has been attached.

The lockout device 202 comprises two rails 302, 702. Each rail 302, 702 is provided on an opposing side of the lockout device 202. The rails are configured for sliding engagement with the grooves 108, 110 of the battery interface. Suitably, the rails on the lockout device 202 correspond in width and how far they are spaced apart to the rails on a battery pack. That is, the lockout device 202 slides into engagement with the battery interface in the same way that a battery pack will slide into engagement with the battery interface. As illustrated, the lockout device is not as long as the battery interface. There is no need for the lockout device 202 to extend along the whole length of the battery interface 100. That is, there is no need for the lockout device 202 to be of the same length as a battery pack.

It can be sufficient, as illustrated in figure 2, for the lockout device 202 to be attachable to a portion of the battery interface 100 to prevent a battery pack from being attached to the battery interface. As illustrated in figure 2, the lockout device 202 is attachable to the open end 112 of the battery interface 100. Covering the open end of the battery interface in this way means that the rails of a battery pack cannot slide into the grooves of the battery interface. Thus, the lockout device blocks a battery pack from being attached to the battery interface.

The lockout device comprises a device body 306 and a latch 402. The latch 402 is movable relative to the device body 306. The latch comprises a lip 404. The lip 404 depends from an underside (in the orientation of figure 4) of the lockout device 202. That is, the lip 404 is arranged to protrude towards the battery interface 100 when the lockout device 202 is mounted to the battery interface. Referring to figure 1, the battery interface comprises a locking groove 114, with which the lip 404 is configured to engage. The locking groove can form at least part of the retention device of the battery interface for mechanically securing a battery pack to the battery interface. The latch is arranged to restrict the removal of the lockout device 202 from the battery interface 100. The latch is arranged to restrict the sliding of the lockout device 202 relative to the battery interface 100.

One manner of operation of the latch is illustrated in figures 5 and 6. The lockout device 202 has a locked configuration in which the lockout device cannot be removed from the battery interface 100. This locked configuration is illustrated in figure 5. The lockout device 202 has an unlocked configuration in which the lockout device 202 is attachable to and removable from the battery interface 100. This unlocked configuration is illustrated in figure 6.

In the locked configuration, the lip 404 of the latch 402 protrudes downwardly of the lockout device 202. That is, the lip extends beyond a lower surface of the lockout device ('lower' in this context refers to the orientation shown in figure 5). In this configuration, the lip is configured to engage with the locking groove 114 of the battery interface 100. That is, the lip 404 is configured to protrude into the locking groove. As can be seen from figure 5, the lip 404 has a front surface 502 (facing towards the left in the orientation of figure 5) and a rear surface 504 (facing towards the right in the orientation of figure 5). The front surface has a steeper incline, relative to a base of the lockout device, than the rear surface.

As the lockout device 202 is moved into engagement with the battery interface, the lip 404 will contact a surface of the battery interface between the grooves 108 110. The slanting rear surface 504 will contact the surface of the battery interface. This contact will cause the latch to move relative to the device body towards the configuration shown in figure 6. As the lockout device passes along the battery interface, the lip 404 will align with the locking groove 114. Once the lip is above the locking groove, the locking groove will receive the lip of the latch, and the latch will return to the configuration shown in figure 5. The lip 404 will be seated within the locking groove 114.

Referring to figure 4, the lip 404 is suitably disposed along a portion of the width of the lockout device. Referring to figure 1, the locking groove 114 extends along a portion of the width of the battery interface. For the lip to fit within the locking groove, the width of the lip is equal to or preferably at least slightly less than the width of the locking groove. Providing the lip and locking groove with an extended width increases the contact area between the lip and the locking groove. Increasing the contact area can improve the force with which the lockout device resists removal from the battery interface when the lockout device is in the locked configuration. Suitably, the width of the locking groove is at least one third of the width of the battery interface, or at least half of the width of the battery interface. Suitably, the width of the lip is at least one third of the width of the lockout device. Suitably, the width of the lip is less than the width of the locking groove.

The lip and locking groove align with one another to cause the lip to become seated within the locking groove. As illustrated, the lip and locking groove extend across a width of the lockout device and battery interface, respectively. That is, the lip and the locking groove extend generally perpendicularly to an axis along which the lockout device can be attached to and removed from the battery interface.

Further travel of the lockout device 202 along the battery interface can be restricted by a portion of the lockout device 202 abutting against a portion of the open end 112 of the battery interface.

When the lip 404 of the lockout device 202 is seated in the locking groove 114 of the battery interface 100, the front surface 502 of the lip will be adjacent a corresponding surface on the inside of the locking groove. As illustrated, the front surface of the lip is generally perpendicular to the direction along which the lockout device would be removed from the battery interface. The surface on the inside of the locking groove facing the front surface of the lip is also generally perpendicular to the direction along which the lockout device would be removed from the battery interface. Thus, when attempting to remove the lockout device from the battery interface, when the latch is in the latch engagement position illustrated in figure 5, the front surface 402 will abut the surface on the inside of the locking groove. This abutment restricts movement of the lockout device in the removal direction. Thus, in the latch engagement position, the latch locks the lockout device to the battery interface.

To remove the lockout device from the battery interface, the latch can be moved to the latch disengagement position, as illustrated in figure 6. In the latch disengagement position, the lockout device is in the unlocked configuration. In the latch disengagement position, the lip 404 of the latch 402 is removed from the locking groove 114. The lip will not therefore, in this position, impede the movement of the lockout device in the removal direction. That is, in the latch disengagement position, the lip 404 of the latch is within an extent of the device body of the lockout device, and does not protrude from the lower surface of the lockout device. Thus, in this latch disengagement position, the lip will not catch on the locking groove.

The latch 402 is movable relative to the device body 306 of the lockout device 202. In the illustrated example, the latch is unitarily formed with the device body. A joining portion is formed between the latch and the device body. This joining portion is suitably resilient. The resilience of the joining portion can arise from a material and/or configuration of the joining portion. Suitably, the latch is biased towards the latch engagement position (this position is shown in figure 5). The joining portion can bias the latch towards the latch engagement position. Biasing the latch towards the latch engagement position, i.e. biasing the lip towards a position in which it will engage with the locking groove thereby locking the lockout device to the battery interface, can prevent the lockout device from coming away from the battery interface unintentionally. Biasing the latch towards the latch engagement position can help more effectively to seat the lip 404 of the latch in the locking groove 114.

The latch can be moveable relative to the device body in any convenient way. The latch can be manually movable relative to the device body. A rim or actuating lip can be provided on or as part of the latch whereby a user can actuate the latch to move it between the latch engagement position and the latch disengagement position. Suitably an actuating lip is provided on the latch, the actuating lip extending outwardly of the lockout device. The actuating lip can extend from a front of the lockout device. That is, the actuating lip can extend generally along a removal direction of the lockout device.

An arrangement of the lockout device whereby the lockout device can be restricted from moving from the locked configuration to the unlocked configuration will now be described. Referring to figures 5 to 8, the lockout device 202 comprises a first hole 506 in the latch 402. The lockout device 202 comprises a second hole 508 in the device body (also shown at 304 in figures 3 and 4).

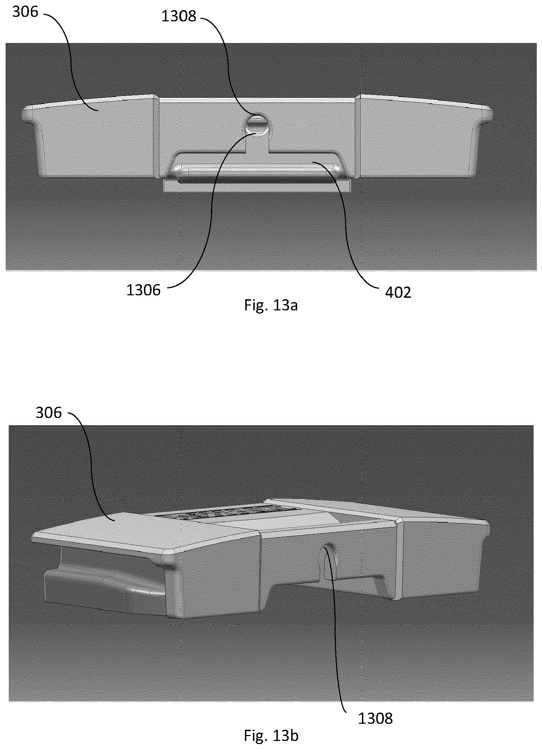

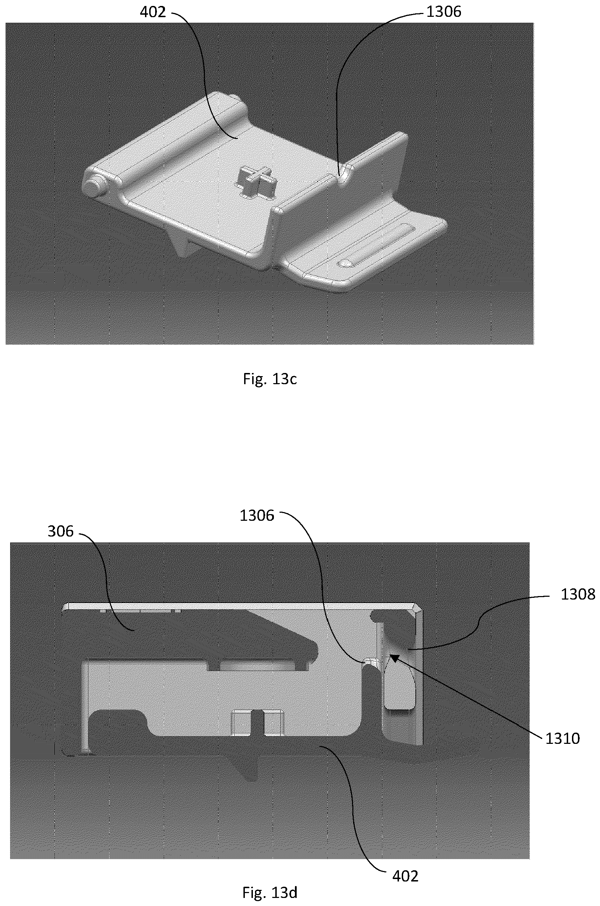

In an alternative embodiment, cut-outs or slots and be used instead of the first and second holes 506 and 508. An example of a lockout device with cut-outs are shown in figures 13a - 13d. As with the embodiments shown in figures 3 and 4, the embodiments in figure 13a-13d have a device body 306 and a latch 402. In this embodiment, the latch 402 has a first cut-out 1306 and the device body has a second cut-out 1308. The first cut-out 1306 and the second cut-out 1308, cooperate to form a passage 1310 through which a retaining element can pass through. The cut-outs 1306 and 1308 thereby operate in the same manner as the holes 506 and 508, which is described further below. An advantage of providing cut-outs instead of holes is that it allows for easier manufacture of the lockout device.

In the locked configuration, illustrated in figure 5, the first hole 506 and the second hole 508 at least partially align with one another. As illustrated, in the locked configuration, the first hole and the second hole are substantially aligned with one another. It may be sufficient if the first hole 506 and the second hole 508 at least partially overlap with one another so that a retaining element can be passed through the first hole and the second hole.

In the unlocked configuration, illustrated in figure 6, the first hole 506 and the second hole 508 do not align with one another.

The retaining element can take any suitable form. In one example, the retaining element is an element that is able to pass through the first hole 506 and through the second hole 508. Suitably, the retaining element is configured so that it will not fall out of the holes. For example, as illustrated in figure 7, the retaining element can comprise a padlock. The retaining element suitably comprises a loop of material or a portion of material with ends larger than the first and/or second holes so that the retaining element will not fall out of the holes. The retaining element may comprise a cable tie or other element that can be formed into a loop. In another example, the retaining element may be an electronic padlock which can be locked and unlocked by entering a key code. In yet another example, the retaining element may be a smart electronic lock which can be locked/unlocked via a wireless connection, such as Bluetooth or via an internet connection. In yet another example, the lockout device does not have holes 506, 508 or cutouts 1306, 1308 for a retaining element to pass through but, instead, the body 306 and latch 402 pieces are able to lock together or unlock from each other via an electrically and/or wirelessly controlled retaining element such as a smart locking bolt that can be activated via a wireless connection. In such an example, the body would house a smart bolt (which would include the bolt, wireless transceiver motor and power source) that moves the bolt in/out of a hole in the latch to lock/unlock the body and latch to/from each other.

Where no retaining element is present, there is no impediment to moving the latch, so that the lockout device can transition between the locked configuration and the unlocked configuration. Where a retaining element is present, the presence of the retaining element through the first hole 506 and the second hole 508 restricts the transition from the locked configuration to the unlocked configuration. Thus, the retaining element can retain the lockout device in the locked configuration and thereby prevent removal of the lockout device from the battery interface.

The first hole 506 and the second hole 508 can be termed a latch retainer, as they cooperate to enable the latch to be retained in the latch engagement position.

It is preferable for the latch retainer to be configured so that a retaining element will pass through the first and second holes at an angle between horizontal and vertical (in the orientation of figure 5). This arrangement can enable a more compact location of the retaining element in the latch retainer. For example, referring to figure 7, the padlock is located through the first and second holes 506 508 so that the padlock rests at an angle between horizontal and vertical. The padlock, thus angled, does not stand up from the lockout device as much as it would if it was located vertically. This can save space. Suitably, the lockout device comprises a support surface 510 configured to support a retaining element passing through the first and second holes 506 508. For example, as best seen in figure 5, the support surface 510 is provided at an angle to an upper surface of the device body 306, and aligns with a passage passing through the first hole 506 and the second hole 508. This arrangement can aid the stability of a retaining element located in the latch retainer.

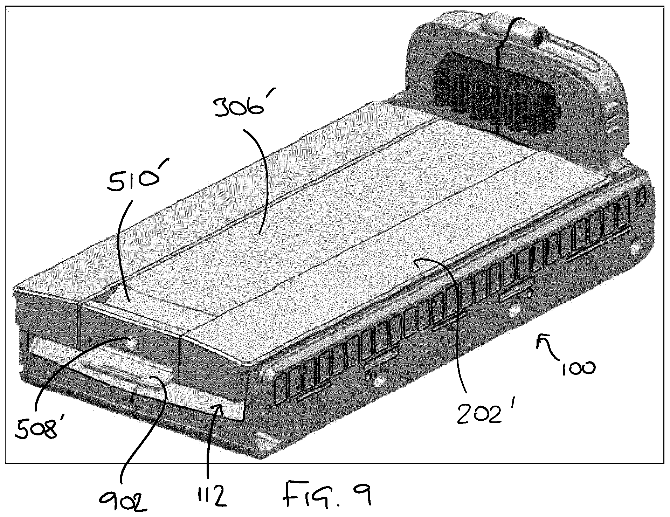

Figures 2 to 8 show a lockout device which is configured to cover the open end of the battery interface. An alternative will be described with reference to figures 9 to 12. In these figures similar elements are labelled by the same reference numbers as in earlier figures, with a dash appended to the number. For example, the device body 306 in the example illustrated in figure 3 corresponds to the device body 306' illustrated in figure 9. For the sake of brevity, a full description of common elements will not be included, but it will be understood that the description elsewhere in this specification applies in corresponding manner to this example.

Figure 9 illustrates a lockout device 202' that is longer than the example already described. The lockout device 202' extends along the length of the battery interface 100 so as to cover both the open end 112 of the battery interface 100 and the electrical terminal 102 of the battery interface 100. In this way, the lockout device 202', as well as performing the functions already described, is able to act as a water-resistant or water-proof cover to the battery interface 100. Suitably, there is a close fit between the rails of the lockout device 202' and the grooves of the battery interface 100 such that fluid is restricted or prevented from flowing between the lockout device 202' and the battery interface 100. Suitably, the lockout device 202' is sized and configured for the rails thereof to be a close fit within the grooves 108 110 of the battery interface 100. Weather-proofing the battery interface can help avoid damage to the electrical terminal by inclement weather when the tool comprising the battery interface is stored outside or being transported. This may be of particular relevance to larger tools such as plate compactors and rammers which are more likely to be stored outside.

The lockout device 202' shown in figure 9 can provide mechanical protection to the battery interface 100 as well as or instead of weather-proofing protection (such as water-proofing protection). The lockout device 202' can be seen to cover the battery interface, including covering the electrical terminal 102. The electrical terminal comprises electrical contacts which may be susceptible to impact damage. Providing the lockout device 202' to cover the electrical terminal means that the electrical terminal 102 is protected from impact damage. The lockout device 202' can therefore help avoid damage such as impact damage from occurring to the battery interface, for example when the tool comprising the battery interface is stored or being transported.

The lockout device 202' of this example comprises a latch retainer having a first hole and a second hole 508'. A support surface 510' is provided in the lockout device 202' to support a retaining element passing through the latch retainer.

Figure 9 illustrates an actuating lip 902 of the lockout device 202' that extends from the lockout device 202' generally in a direction in which the lockout device 202' is removable from the battery interface 100.

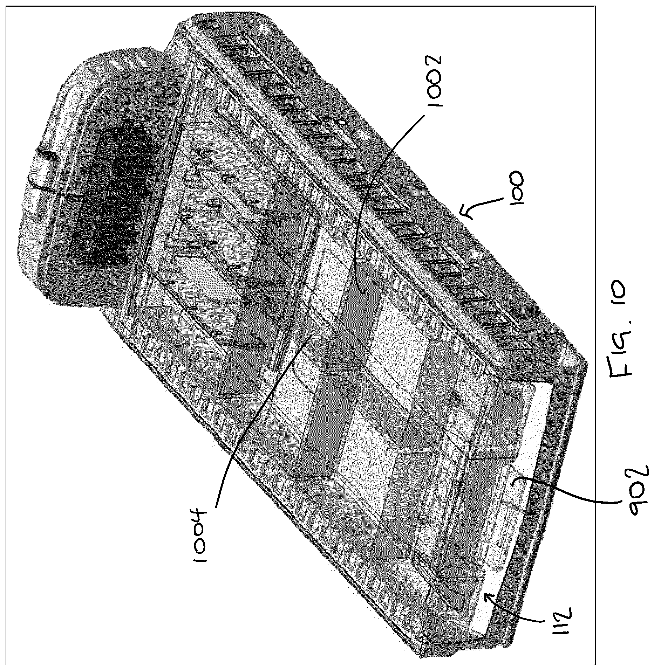

Figure 10 illustrates the example of figure 9, with the lockout device 202' being shown partially transparent. The lockout device 202' is suitably provided with strengthening ribs 1002 1004 that provide support and structural rigidity to the lockout device 202'. Aiding the structural rigidity of the lockout device 202' can help in the protection of the battery interface from damage or water ingress. Aiding the structural rigidity of the lockout device 202' can also help prevent the lockout device 202' from being removed from the battery interface since it restricts the deformability of the lockout device. Suitably, as illustrated, the lockout device comprises at least one width-wise rib 1002 and at least one length-wise rib 1004. In other examples only one rib, and/or only one type of rib need be provided. In other examples, no ribs need be provided.

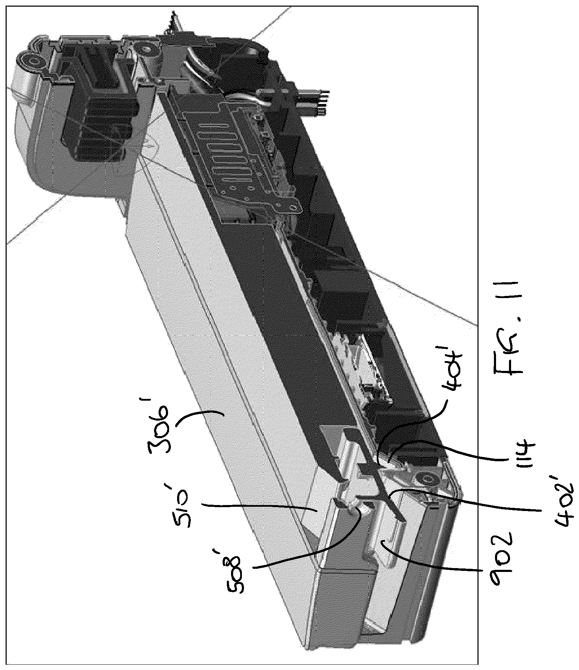

Referring to figure 11, it can be seen that the lockout device 202' is able to lock the battery interface 100 in a manner corresponding to that of the lockout device 202 of earlier examples. The lockout device 202' comprises a latch 402' which is movable relative to a device body 306'. The latch 402' comprises a lip 404' which is configured to be receivable in the locking groove 114 of the battery interface 100.

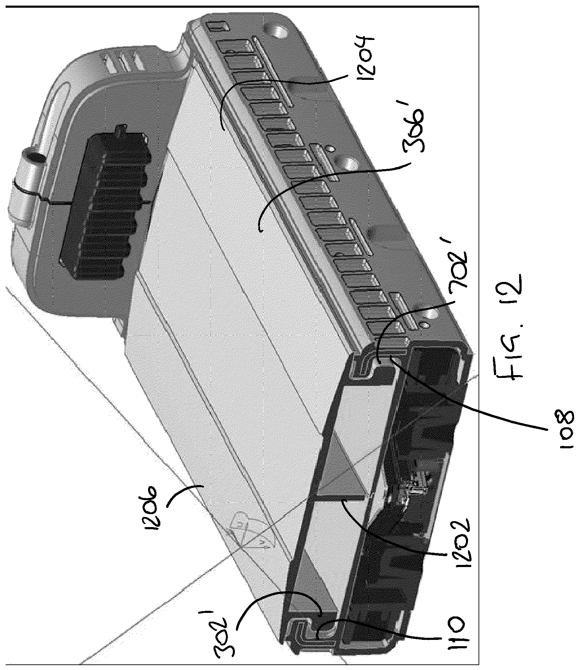

The lockout device 202' comprises two rails 302' 702' located on either side of the lockout device 202'. One rail 302' is configured to slide within one groove 110 of the battery interface. Another rail 702' is configured to slide within another groove 108 of the battery interface. As illustrated in figure 12, a cover portion 1204 1206 of the lockout device 202' is configured to extend over the top of a portion of the battery interface. A channel is formed between the cover portion and the rail, to either side of the lockout device 202'. The lockout device 202' is arranged to capture a portion of the battery interface within the channel, i.e. between the cover portion 1204 and the rail 702' (and between the cover portion 1206 and the rail 302'). This arrangement can help provide a seal such as a labyrinthine seal between the lockout device 202' and the battery interface 100. Such a seal can help restrict or prevent fluid flow such as water between the lockout device 202' and the battery interface 100, aiding in providing a weather-proof cover for the battery interface.

Figure 12 also illustrates a strengthening rib 1202 extending length-wise along an underside of the lockout device 202'.

In the description above, the latch 402 402' has been described as being pivotally movable relative to the device body 306 306'. This is not necessary in all examples. In some examples, the latch is movable relative to the device body in other ways. One such example is for the latch to be slidable relative to the device body. For example, the latch might be slidable in a generally vertical direction (in the orientation of figure 5). The latch may be slidable and rotatable. Other types of movement and other combinations of types of movement are possible. What is important is that the lip 404 404' can move from a position in which it engages with the locking groove 114 to a position in which it is disengaged from the locking groove.

The lip 404 404' and locking groove 114 have been described as extending in a direction generally perpendicular to an axis along which the lockout device 202 202' can be attached to and removed from the battery interface 100. This is not necessary in all examples. It is beneficial for the lip and locking groove to extend perpendicularly to this axis, because this arrangement optimises the force with which the lip (in the locked configuration) will resist the removal of the lockout device. However, the benefits of the present techniques are available where the lip and locking groove are not perpendicular to the axis of attachment/removal, as long as the lip and locking groove are not themselves aligned along this axis of attachment/removal.

In the above, the latch 402 402' has been described as being biased towards the locked configuration. In an alternative, the latch can be biased towards the unlocked configuration. In this arrangement, the biassing can be provided by the joining portion as described above. Biasing the latch towards the latch disengagement position means that a positive action is needed to lock the lockout device 202 202' to the battery interface 100. Biasing the latch towards the latch disengagement position can increase the ease with which the lockout device is removable from the battery interface. In such an arrangement, it is not necessary to manually actuate the latch from the latch engagement position to the latch disengagement position. Biasing the latch towards the latch disengagement position can help provide a clearer visual indication that the lockout device is in the unlocked configuration, since a portion of the latch will protrude upwardly from the latch body (as shown in figure 6). This portion of the latch can be marked so as to be more clearly visible, for example by having an indicator portion on a surface thereof.

In other alternatives, the biasing of the latch 402 402' towards the locked configuration or towards the unlocked configuration can be provided by a biassing means. The biasing of the latch can be provided by a resilient element. The biasing of the latch can be provided by a spring, such as a leaf spring or a coil spring. An example of the coil spring 512 is shown in figure 5 (the coil spring is not shown in the other figures for clarity).

A lockout device may also be provided for coupling to a battery pack as well as, or instead of for coupling to a battery interface. In the description above, the lockout device 202 202' has been described as having complementary features to those of the battery interface, for example lockout device rails for sliding along battery interface grooves. A lockout device for engagement with a battery pack will comprise features complementary to those of the battery pack, for example one or more lockout device groove for cooperating with one or more battery pack rail.

The battery pack suitably comprises a power tool interface for mechanically and electrically engaging the battery pack to the power tool, the power tool interface comprising a battery pack coupling configured for engagement with the retention device of the battery interface to secure the battery pack to the battery interface. Suitably, the lockout device is configured for engagement with the battery pack coupling to prevent the battery pack from being attached to the battery interface. For example, the one or more battery pack rail can form at least part of the battery pack coupling. The lockout device is configured for engagement with the battery pack coupling, for example by having one or more lockout device groove for engagement with the one or more battery pack rail.

Such a lockout device, i.e. one configured for engagement with a battery pack, can be useful in preventing unauthorised use of prototype battery packs and/or for protecting the battery terminals during storage and/or transportation. In a corresponding manner to the lockout devices 202 202' described herein with reference to the drawings, a lockout device for engagement with a battery pack can be a relatively shorter lockout device which is configured to prevent unintended use of the battery pack or a relatively longer lockout device configured to offer damage protection and/or weather protection to the battery pack as well as or instead of preventing unintended use.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A lockout device for preventing a battery pack from attaching to a battery interface of a power tool, the battery interface being for mechanically and electrically engaging a battery pack to the power tool, the battery interface comprising a retention device for mechanically securing the battery pack to the battery interface, the lockout device comprising:
a coupling configured for engagement with the retention device of the battery interface to prevent a battery pack from being attached to the battery interface.

2. A lockout device as claimed in claim 1, configured to have:
an unlocked configuration in which the lockout device can be attached to and removed from the battery interface; and
a locked configuration in which the lockout device cannot be removed from the battery interface.

3. A lockout device as claimed in claim 2, in which the coupling comprises a latch and a device body, the latch being movable relative to the device body, and the lockout device being suitably configured so that, in the locked configuration, the latch is in a latch engagement position in which the latch is engageable with the battery interface to prevent removal of the lockout device from the battery interface.

4. A lockout device as claimed in claim 3, configured to be movable along a first axis of the lockout device for engagement with the battery interface, in which the latch is configured to restrict movement of the lockout device along the first axis.

5. A lockout device as claimed in any preceding claim, comprising a battery interface engagement feature for mechanically engaging with the battery interface.

6. A lockout device as claimed in claim 5, in which the battery interface engagement feature comprises a protrusion or recess for engaging with a recess or protrusion of the battery interface.

7. A lockout device as claimed in any preceding claim, comprising a rail for sliding engagement along a groove of the battery interface.

8. A lockout device as claimed in any of claims 3 to 7, in which the latch comprises a lip configured to engage with a locking groove of the battery interface in the latch engagement position.

9. A lockout device as claimed in any of claims 3 to 8, comprising a latch retainer configured to retain the latch in the latch engagement position.

10. A lockout device as claimed in claim 9, in which the latch retainer comprises a first hole or cut-out portion in the latch and a second hole or cut-out portion in the device body.

11. A lockout device as claimed in any of claims 3 to 10, in which the latch is biased towards one of the latch engagement position and the latch disengagement position.

12. A lockout device as claimed in any of claims 3 to 11, in which the latch comprises an actuating lip.

13. A lockout device as claimed in any preceding claim, comprising a cover configured to cover an electrical terminal of the battery interface.

14. A power tool having a battery interface, the power tool comprising a lockout device as claimed in any preceding claim attached to the battery interface.

15. A power tool system comprising:
a power tool comprising a battery interface for mechanically and electrically engaging a battery pack to the power tool, the battery interface having a retention device for mechanically securing the battery pack to the battery interface;
a battery pack comprising a power tool interface for mechanically and electrically engaging the battery pack to the power tool, the power tool interface having a battery pack coupling configured for engagement with the retention device to secure the battery pack to the battery interface; and
a lockout device as claimed in any of claims 1 to 13.

16. A lockout device for preventing a battery pack from attaching to a battery interface of a power tool, the lockout device comprising:
a coupling configured for engagement with the battery pack to prevent the battery pack from being attached to the battery interface.
